# EUROPEAN PATENT APPLICATION

(11) **EP 1 279 936 A1**
(43) Date of publication of application: **29.01.2003**
(21) Application number: 01306422.5
(22) Date of filing: 26.07.2001
(51) Int. Cl.: G01F 23/32, G01F 23/36

(54) **Liquid level sensing mechanism**

(71) Applicant: Visteon Global Technologies, Inc., Dearborn, Michigan 48126-2490 (US)
(72) Inventor: Bacon, Donald, Chelmsford, Essex CM1 3BX (GB)
(74) Representative: Copp, David Christopher

(57) **Abstract**

The present invention relates to a liquid level sensing mechanism for attachment to a mount within a liquid container. The mechanism includes a fixed structure (2) and a float arm (1). The float arm (1) has a first member (6) with a buoyant float (10) at one end. The float arm includes at least one linking member (28) pivotally attached to the first member (6). The float arm (1) is coupled to the fixed structure (2) in at least two locations such that the float (10) can float on the surface of a liquid within the container. This will cause the float arm (1) to move as the liquid level changes. The coupling is such that a path described by the float (10) is not an arc, and there is a substantially unique orientation of the float arm (1) for any given liquid height.

## Description

The present invention relates to a liquid level sensing mechanism for use in a liquid container. The invention is especially intended for use in an automobile fuel tank.

To indicate liquid level it is conventional to have an arm with a float attached. The arm is pivoted at the end opposite the float so that the float, as it moves up and down with varying liquid level, moves in a path forming an arc of constant radius about the pivot. Conventionally an electrical contact moves with the arm and moves over a resistor card to produce an electrical output indicative of the liquid level.

This arc path is a limitation to the range of indication that the float arm is capable of. In some liquid containers, this arc path may not be adequate for the liquid level to be accurately indicated over the entire capacity range of the liquid container from full to empty. This may be due to geometrical limitations on the placement of the pivot and the shape of the container.

In particular, these geometrical limitations are increasingly a problem for fuel level indication in automobile fuel tanks. Space restrictions mean that fuel tanks often have unusual geometries and the available arc path of the float may be unsuitable for accurate indication of the fuel level.

Float arms are usually wire formed rods and these can be difficult to manufacture accurately. Since the manufacturing tolerances for wire forming processes tend to be large, the accuracy of the liquid level information provided by such a float arm may not be precise.

It is an object of the present invention to address some of the issues raised above.

According to the invention there is provided a liquid level sensing mechanism for sensing the level of liquid in a reservoir, the mechanism comprising a structure fixed relative to the reservoir, an arm pivoted at one end on the fixed structure and carrying a float at the other end and means for providing a liquid level signal in accordance with the angular orientation of the arm to the fixed structure, wherein the arm comprises a plurality of connected links between the pivoted end and the float end, such that relative movement takes place between the links as the float rises and falls with changes in liquid level such that a path described by the float is not an arc of constant radius, and such that there is a substantially unique orientation of the float arm for any given liquid level.

The term "fixed structure" is used herein to describe the portion of the mechanism to which the float arm is coupled. The fixed structure may comprise several parts, or be a unitary structure.

By using a plurality of links to form the float arm, it is possible to couple them to the fixed structure in such a way that the path described by the float is not arc. This allows liquid level indication in geometries in which the arm location or geometry of the container would not be suitable for a standard, constant radius, arc float path. The float could be near the mount at one end of travel, and away from the mount at the other end of travel; such a geometry cannot be achieved with traditional float arms which move in an arc of constant radius.

Altering the coupling between links and the fixed structure can be used to control the path of the float relative to the fixed structure. Preferably at least one of the links is elongate, as this will allow the float to be at a distance from the fixed structure and hence allow a greater degree of flexibility in the path of the float.

In order to define accurately the path followed by the float, the float arm may be coupled to the fixed structure in at least two locations. In a preferred embodiment, the float arm is coupled to the fixed structure in two locations and the float arm comprises three connected links. Said three links being one first member with the float at one end and two linking members coupling the first member to the fixed structure. For clarity, the invention will be described hereafter with reference to this preferred embodiment.

The term "first member" is used herein to refer to a member not directly attached to the grounded link and having a float at one end.

Preferably a first linking member is pivoted to a first location on the fixed structure and to a first location on the first member, and a second linking member is pivoted to a second location on the fixed structure and to a second location on the first member. This arrangement for the linkage allows the path of the float to be accurately defined and the float path can be varied by altering the position of the first and second locations or by altering the lengths of one of more of the members.

In order to provide the greatest degree of flexibility in the path of the float end, it is preferable that one linking member should not be able come into contact with, and hence restrict the motion of, the other. The attachment locations of the fixed structure and first member may lie substantially in a plane. The first linkage may be attached to the fixed structure and the first member on one side of the plane and the second linkage may be attached on the opposite side of the plane. Since the linking members are the on opposite sides of a plane, the possibility of contact between the linking members is avoided. The use of attachment locations that are not in the same plane, or specially shaped linking members may also avoid such contact between the links.

It is preferred that the linking members are attached to the grounded and first members at locations near the ends of the linking members rather than near the centre. By using linking members of substantially the desired length the materials cost of the float arm is reduced. Also, the ends of the linking members will not protrude from the float arm and this will reduce the likelihood of the float arm becoming stuck to something within the liquid or becoming stuck on a feature of the container.

To provide an different range of motion for the float end relative to the fixed structure, a sliding joint may be used to couple the first member to the second location on the fixed structure. The sliding joint may be pivotally attached to a location on the fixed structure and couple the first member to the grounded link, but permit the first member to move through the sliding joint. The path of the float can still be accurately defined, as for a given float height there is only one solution for the positions of the members in the float arm. The use of a sliding joint increases the range of available float paths that can be fixed by altering the location of the attachment points or lengths of the linking members.

Some or all of the members used to form the float arm may be moulded. Moulded manufacturing methods are inherently more accurate and repeatable than wire forming methods. The use of Moulded members allows the float arm to be manufactured to finer tolerances than traditional wire formed rods and hence the float arm can be used to provide a more accurate measurement of liquid level.

Accordingly the invention provides a liquid level sensing mechanism comprising an arm pivoted at one end on a fixed structure and carrying a float at the other end, wherein the arm comprises at least one moulded member between the float end and the pivoted end, the arm moving relative to the fixed structure as the float rises and falls with changes in the liquid level.

A liquid level sensing mechanism is often used to provide an electrical signal indicative of the position of the float arm and hence the liquid level. Any of the links that are attached to the fixed structure could be used as the driver for such a signal. Such a signal is usually generated by a sprung contact attached to the float arm moving over a resistor card attached to the grounded link. If a moulded link was used as the carrier for the contact spring, the contact spring could be integrally moulded with the link. Since there is a defined position for the links for a given float height, a standard resistor card could be used to measure the angle of a link relative to the fixed structure and hence provide a signal indicative of the position of the float arm and liquid level.

If a sliding joint is used in the float arm, then this joint could be used to provide a linear signal indicative of the position of the sliding joint and hence the position of the float arm and liquid level. This may require a linear resistor card.

Although the signal from the mechanism has been described as being electrical, it should be understood that the signal could be mechanical, optical, or any other form of signal that could indicate the position of the float arm.

A liquid level sensing mechanism according to the invention is particularly intended to be used as part of a fuel level indication device for a fuel tank in an automobile. Although this is the intended use of the invention, it should be understood that the invention is equally applicable to any type of liquid level sensing apparatus, for instance mechanism could stop a liquid entering a container when the liquid level in the container reaches a predetermined level.

The invention will now be further described, by way of example, with reference to the accompanying drawings, in which:
Figure 1 shows a side view of a float arm and fixed structure for a mechanism according to the invention;
Figure 2 shows a side view of a different embodiment of the float arm of Figure 1 including a sliding joint;
Figure 3 shows a schematic view of the float path relative to the fixed structure of the float arm of Figure 1; and
Figure 4 shows a fuel tank including a float arm according to the invention.

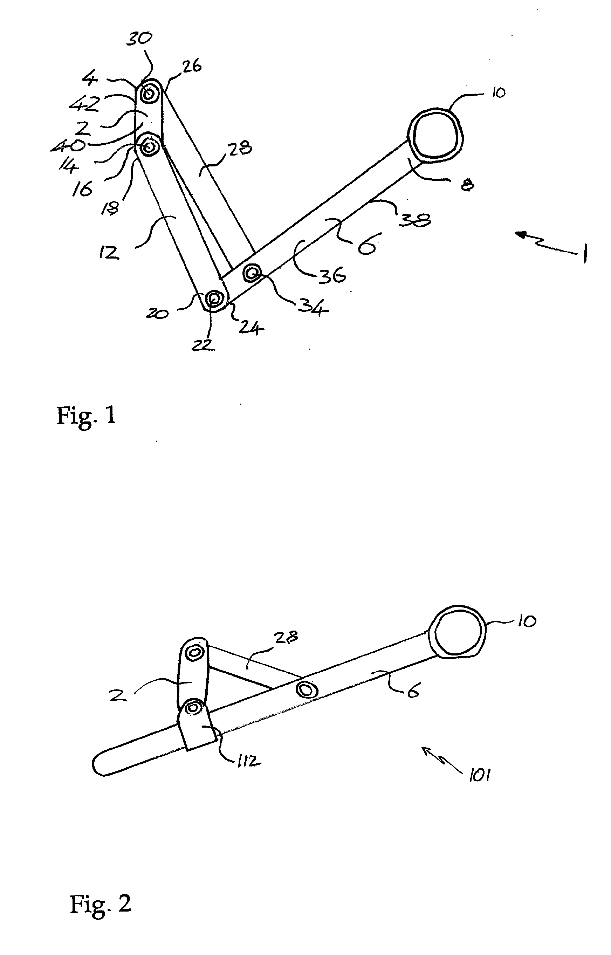

Figure 1 shows a float arm 1 and a fixed structure 2 for attachment to a mounting (not shown) and a first member 6 with a float end 8 attached to a buoyant float 10.

The first member 6 has a front face 36 and a rear face 38. The fixed structure has a front face 40 and a rear face 42. The front face 40 of the fixed structure 2 and the front face 36 of the first member 6 are substantially in the same plane and the rear faces 38,42 are substantially in the same plane.

An end 26 of a first linking member 28 is attached with a pivot 30 to an end 4 of the rear face 42 of the fixed structure 2. The opposite end 32 of the second linking member is attached with a pivot 34 to the rear face 38 of the first member 6 in a location between the float end 8 and the opposite end 24.

An end 18 of a second linking member 12 is attached with a pivot 14 to an end 16 of the front face 40 of the fixed structure 2. The opposite end 20 of the first linking member 12 is attached with a pivot 22 to an end 24 of the front face 36 of the first member 6 opposite the float end 8.

Figure 2 shows a different embodiment of a float arm according to the invention. In this figure features of the float arm that similar to the features of Figure 1 are labelled with similar reference numerals incremented by 100.

The second linking member 112 forms a sliding joint through coupling the first member 6 to the fixed structure 2. The sliding joint allows the first member 6 to slide through the linking member 112 to alter the effective length of the first member 6 between the float 10 and the fixed structure 2. This creates a different path for the float 10.

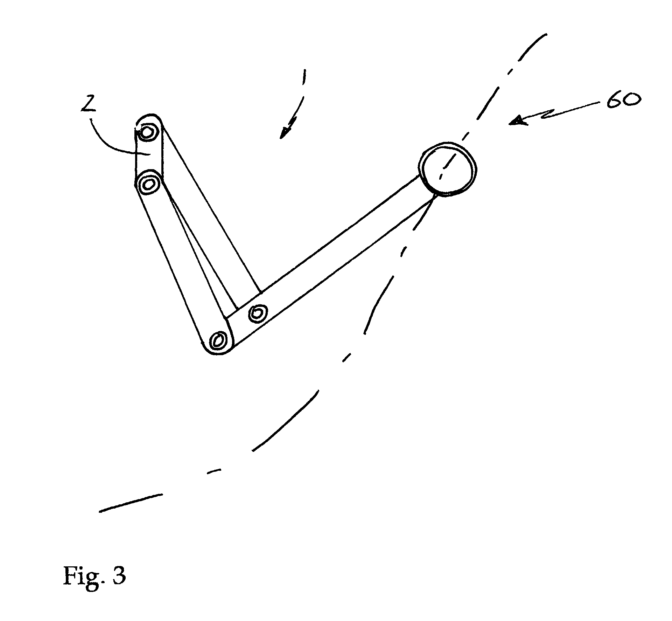

Figure 3 shows a schematic view of a path 60 described by the float of the float arm 1 of Figure 1 relative to the fixed structure 2. It can be seen that the path 60 is not an arc.

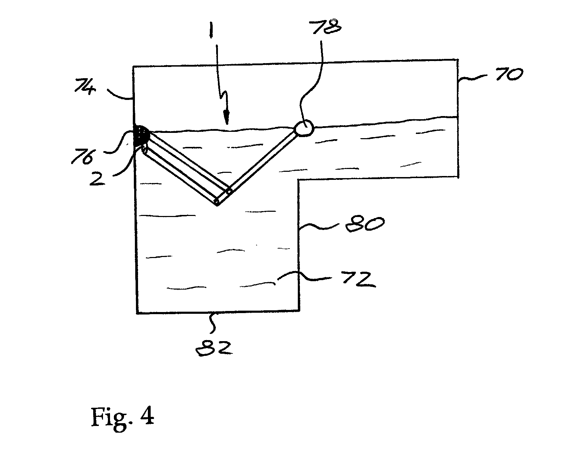

Figure 4 shows a fuel tank 70 containing fuel 72. The fuel tank has attached to an edge 74 a mounting 76 to which the fixed structure 2 and a float arm 1 is attached. The float arm has a float 78 attached to the float end. The fuel tank has a step 80 in a bottom surface 82. It can be seen that float 78 having a standard arc path about the mounting 76 would not be able to adequately indicate the fuel level at the extremes of the tank 70 being nearly full, or nearly empty of fuel 72 due to the geometric limitation of the step 80.

Since the float arm 1 has a linkage system, the path followed by the float 78 can be controlled to avoid the step 80 and the float arm 1 can adequately indicate the fuel level at the extremes mentioned above.

## Claims

1. A liquid level sensing mechanism for sensing the level of liquid in a reservoir, the mechanism comprising a structure fixed relative to the reservoir, an arm pivoted at one end on the fixed structure and carrying a float at the other end and means for providing a liquid level signal in accordance with the angular orientation of the arm to the fixed structure, wherein the arm comprises a plurality of connected links between the pivoted end and the float end, such that relative movement takes place between the links as the float rises and falls with changes in liquid level such that a path described by the float is not an arc of constant radius, and such that there is a substantially unique orientation of the float arm for any given liquid level.

2. A mechanism as claimed in claim 1, in which the float arm comprises a first member having a float at one end and two linking members coupling the first member to the fixed structure.

3. A mechanism as claimed in claim 2, in which a first linking member is pivotally attached to a first location on the fixed structure and to a first location on the first member, and a second linking member is pivotally attached to a second location on the fixed structure and to a second location on the first member.

4. A mechanism as claimed in claim 3, in which the attachment locations on the fixed structure and first member lie substantially in the same plane and the first linking member is attached to the fixed structure and the first member on one side of the plane and the second linking member is attached on the opposite side of the plane.

5. A mechanism as claimed in claims 3 or 4, in which the linking members are pivotally attached to the fixed structure by a first end of each linking member, and to the first member by a second end of each linking member, the second end of each linking member being opposite the first end.

6. A mechanism as claimed in claim 2, in which one of the linking members is a sliding joint.

7. A mechanism as claimed in any preceding claim, in which at least one of members used to form the float arm are moulded.

8. A mechanism as claimed in any preceding claim, in which a linking member pivotally attached to the fixed structure is used as a driver for providing a signal indicative of the position of the float arm.

9. A mechanism as claimed in claim 6, in which the sliding joint is used to provide a linear signal indicative of the position of the float arm.

10. A liquid level sensing mechanism comprising an arm pivoted at one end on a fixed structure and carrying a float at the other end, wherein the arm comprises at least one moulded member between the float end and the pivoted end, the arm moving relative to the fixed structure as the float rises and falls with changes in the liquid level.

11. A mechanism as claimed in claim 10, in which the moulded member carries an integrally moulded contact spring, said contact spring being used to carry a contact for generating a signal indicative of the position of the float arm.

12. A mechanism as claimed in any preceding claim, adapted for use in a motor vehicle fuel tank.

13. A mechanism substantially as herein described, with reference to or as shown in the accompanying drawings.
